# EUROPEAN PATENT APPLICATION

(11) **EP 4 763 358 A1**
(43) Date of publication of application: **24.06.2026**
(21) Application number: 25831352.7
(22) Date of filing: 12.06.2025
(51) Int. Cl.: B05C 5/02, B05C 1/08, B05C 11/10, H01M 4/04

(54) **COATING APPARATUS**

(30) Priority: 18.06.2024 KR 20240079153
(71) Applicant: LG Energy Solution, Ltd., Seoul 07335 (KR)
(72) Inventor: PARK, Min Gu, Daejeon 34122 (KR); KIM, Sang Min, Daejeon 34122 (KR); MOON, Young Gyu, Daejeon 34122 (KR); CHOI, Min Hyuck, Daejeon 34122 (KR); KIM, Guk Tae, Daejeon 34122 (KR); KIM, Min Cheol, Daejeon 34122 (KR)
(74) Representative: Plasseraud IP
(86) International application number: PCT/KR2025/095393
(87) International publication number: WO 2025/264085

(57) **Abstract**

The technical idea of the present disclosure provides a coating apparatus including: a coating die comprising a first electrode slurry outlet discharging a first electrode slurry, a first insulating liquid outlet discharging a first insulating liquid, a second electrode slurry outlet discharging a second electrode slurry, and a second insulating liquid outlet discharging a second insulating liquid; a first coating shim inserted into the coating die and comprising a first electrode slurry flow path communicating with the first electrode slurry outlet and a first insulating liquid flow path communicating with the first insulating liquid outlet; and a second coating shim inserted into the coating die and comprising a second electrode slurry flow path communicating with the second electrode slurry outlet and a second insulating liquid flow path communicating with the second insulating liquid outlet, wherein a solid content of the first insulating liquid is different from a solid content of the second insulating liquid.

## Description

### [Technical Field]

The present disclosure relates to a coating apparatus.

This application claims the benefit of priority from Korean Patent Application No. 10-2024-0079153, filed on June 18, 2024, the entire contents disclosed therein are incorporated by reference into this disclosure.

### [Background]

With technological development and increasing demand for mobile devices, the demand for secondary batteries as an energy source is rapidly increasing, and such secondary batteries include an electrode assembly. The electrode assembly has a form in which a positive electrode, a separator, and a negative electrode are stacked at least once or more, and the positive electrode and the negative electrode are manufactured by applying a coating liquid to current collectors made of aluminum foil and copper foil, respectively. The coating liquid may include an electrode slurry (positive electrode active material slurry or negative electrode active material slurry) and/or an insulation liquid applied to both side portions of the electrode slurry layer to insulate the electrode slurry layer coated with the electrode slurry.

### [Summary]

### [Technical Problem]

The technical problem to be solved by the present disclosure is to provide a coating apparatus.

### [Technical Solution]

To solve the above-described problem, the technical idea of the present disclosure provides a coating apparatus comprising: a coating die comprising a first electrode slurry outlet discharging a first electrode slurry, a first insulating liquid outlet discharging a first insulating liquid, a second electrode slurry outlet discharging a second electrode slurry, and a second insulating liquid outlet discharging a second insulating liquid; a first coating shim inserted into the coating die and comprising a first electrode slurry flow path communicating with the first electrode slurry outlet and a first insulating liquid flow path communicating with the first insulating liquid outlet; and a second coating shim inserted into the coating die and comprising a second electrode slurry flow path communicating with the second electrode slurry outlet and a second insulating liquid flow path communicating with the second insulating liquid outlet, wherein a solid content of the first insulating liquid is different from a solid content of the second insulating liquid.

In exemplary embodiments, the coating die comprises: a first die block comprising a first manifold accommodating the first electrode slurry and a first internal flow path communicating with the first insulating liquid flow path of the first coating shim; a second die block comprising a second manifold accommodating the second electrode slurry and a second internal flow path communicating with the second insulating liquid flow path of the second coating shim; and a third die block disposed between the first die block and the second die block, wherein the first coating shim is disposed between the first die block and the third die block, and the second coating shim is disposed between the second die block and the third die block.

In exemplary embodiments, the coating apparatus further comprises: a first insulating liquid supply part supplying the first insulating liquid to the coating die; and a second insulating liquid supply part supplying the second insulating liquid to the coating die, wherein the first insulating liquid supplied from the first insulating liquid supply part and the second insulating liquid supplied from the second insulating liquid supply part have different solid contents.

In exemplary embodiments, the coating apparatus further comprises a coating roll supporting a base substrate transferred in a transfer direction, wherein the first insulating liquid outlet and the second insulating liquid outlet are sequentially disposed along the transfer direction of the base substrate, and the solid content of the second insulating liquid is greater than the solid content of the first insulating liquid.

In exemplary embodiments, the viscosity of the second insulating liquid is greater than the viscosity of the first insulating liquid.

In exemplary embodiments, the solid content of the first insulating liquid is between 10 wt.% and 20 wt.%, and the solid content of the second insulating liquid is between 25 wt.% and 30 wt.%.

In exemplary embodiments, the first electrode slurry outlet and the second electrode slurry outlet are sequentially disposed along the transfer direction of the base substrate, the first electrode slurry outlet is disposed on one side of the first insulating liquid outlet, and the second electrode slurry outlet is disposed on one side of the second insulating liquid outlet.

In exemplary embodiments, the coating apparatus further comprises a coating roll supporting a base substrate transferred in a transfer direction, wherein the first insulating liquid outlet and the second insulating liquid outlet are sequentially disposed along the transfer direction of the base substrate, and the solid content of the first insulating liquid is greater than the solid content of the second insulating liquid.

In exemplary embodiments, the viscosity of the first insulating liquid is greater than the viscosity of the second insulating liquid.

In exemplary embodiments, the coating die is configured to simultaneously discharge the first electrode slurry, the second electrode slurry, the first insulating liquid, and the second insulating liquid toward the base substrate.

In exemplary embodiments, the coating apparatus is configured to coat a first electrode slurry layer formed from the first electrode slurry, a second electrode slurry layer formed from the second electrode slurry, a first insulating layer formed from the first insulating liquid, and a second insulating layer formed from the second insulating liquid on the base substrate, wherein the second electrode slurry layer is stacked on the first electrode slurry layer, and the second insulating layer is stacked on the first insulating layer.

### [Advantageous Effects]

According to exemplary embodiments of the present disclosure, by simultaneously discharging a first electrode slurry, a second electrode slurry, a first insulating liquid, and a second insulating liquid toward a base substrate, an electrode sheet having an electrode slurry layer with a stacked structure in which a first electrode slurry layer and a second electrode slurry layer are stacked and an insulating layer with a stacked structure in which a first insulating layer and a second insulating layer are stacked can be manufactured.

According to exemplary embodiments of the present disclosure, by forming one of the first insulating layer and the second insulating layer from an insulating liquid having a high solid content, a total thickness of the insulating layer can be increased. Since the total thickness of the insulating layer is increased, a contact area where the insulating layer in a wet state meets the electrode slurry layer in a wet state is increased, thereby improving a sliding suppression effect of the electrode slurry layer.

The technical effects that can be obtained in exemplary embodiments of the present disclosure are not limited to the above-described effects, and other effects not mentioned can be clearly derived and understood by a person skilled in the art from the following description. In other words, unintended effects of implementing the exemplary embodiments of the present disclosure may also be derived from the exemplary embodiments of the present disclosure by a person skilled in the art.

### [Brief Description of the Drawings]

FIG. 1 is a perspective view illustrating a portion of a coating apparatus according to exemplary embodiments of the present disclosure.
FIG. 2 is a cross-sectional view of a coating apparatus according to the II-II' lines of FIG. 1.
FIG. 3 is a cross-sectional view of a coating apparatus according to the III-III' lines of FIG. 1.
FIG. 4 is a cross-sectional view illustrating a coating apparatus along the IV-IV' line of FIG. 2.
FIG. 5 is a cross-sectional view illustrating a coating apparatus according to the V-V' lines of FIG. 2.
FIGS. 6 and 7 are cross-sectional views illustrating a coating process of a coating apparatus according to exemplary embodiments of the present disclosure.
FIG. 8 is a cross-sectional view illustrating an electrode sheet prepared by coating of a coating apparatus according to exemplary embodiments of the present disclosure.
FIG. 9 is a cross-sectional view illustrating an electrode manufacturing device according to exemplary embodiments of the present disclosure.
FIG. 10 is a flow diagram illustrating an electrode manufacturing method according to exemplary embodiments of the present disclosure.

### [Detailed Description]

Hereinafter, preferred embodiments of the present disclosure will be described in detail with reference to the accompanying drawings. Prior to this, the terms or words used in the present specification and claims should not be construed as being limited to conventional or dictionary meanings, and should be interpreted as meanings and concepts that conform to the technical idea of the present disclosure based on the principle that the inventors can appropriately define the concept of terms in order to describe their own invention in the best way.

Therefore, it should be understood that the embodiments described in the present specification and the configurations shown in the drawings are merely one most preferred embodiment of the present disclosure and do not represent all of the technical ideas of the present disclosure, so that various equivalents and modifications that may replace them may exist at the time of the present application.

In addition, in describing the present disclosure, when it is determined that a detailed description of a related known configuration or function may obscure the gist of the present disclosure, the detailed description thereof will be omitted.

The embodiments of the present disclosure are provided to more completely describe the present disclosure to those skilled in the art, so the shapes and sizes of components in the drawings may be exaggerated, omitted, or schematically illustrated for clearer explanation. Therefore, the size or ratio of each component does not entirely reflect the actual size or ratio.

### (first embodiment)

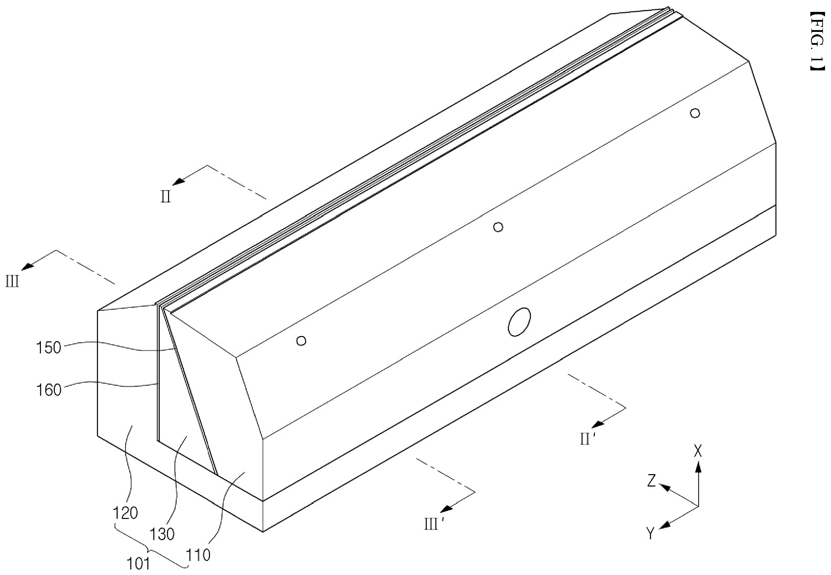

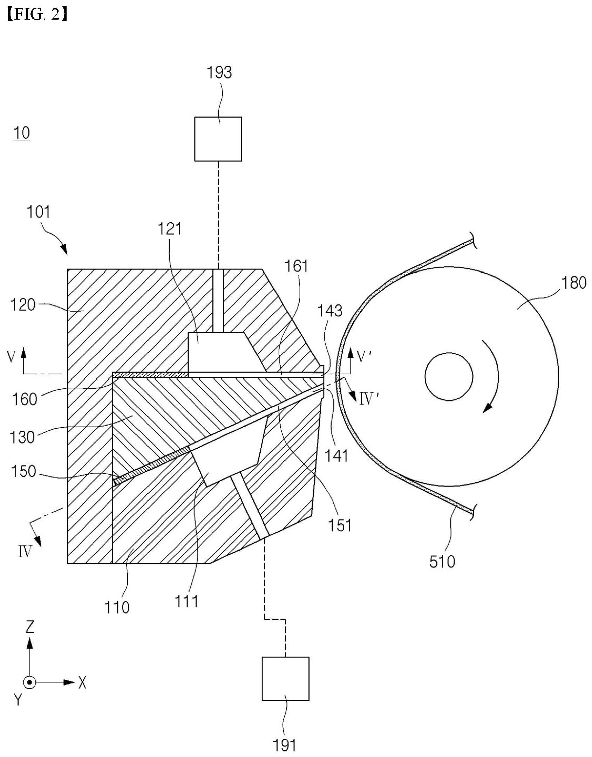

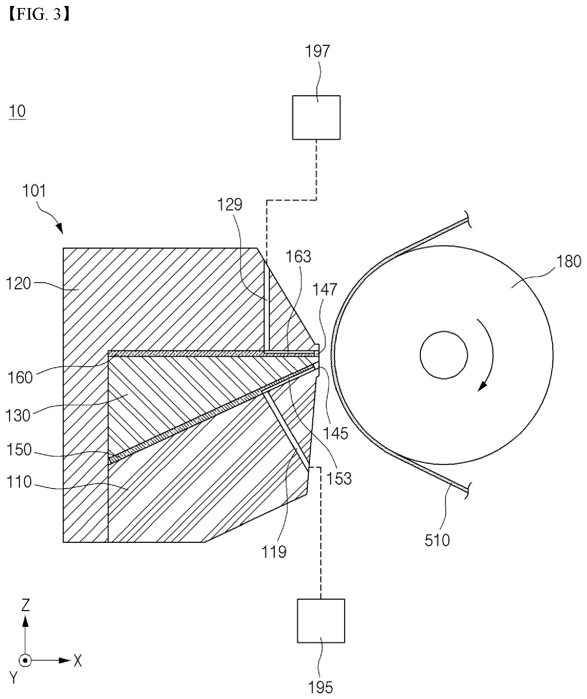

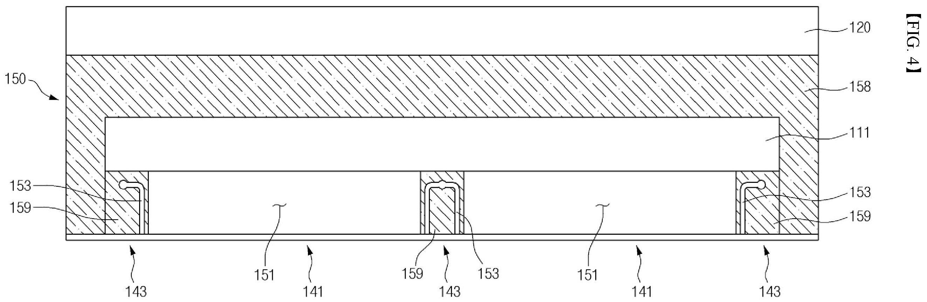

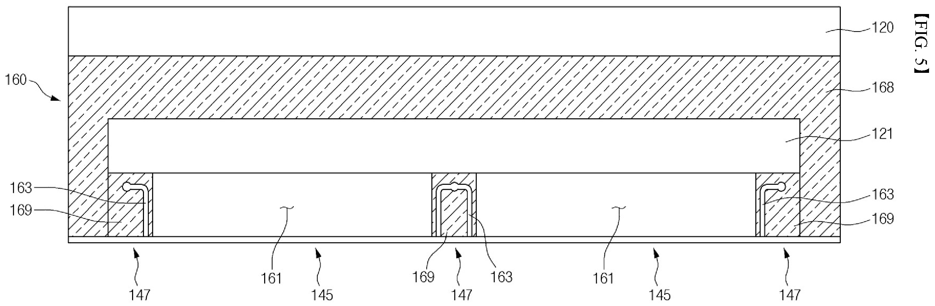

FIG. 1 is a perspective view illustrating a portion of a coating apparatus 10 according to exemplary embodiments of the present disclosure. FIG. 2 is a cross-sectional view of the coating apparatus 10 taken along line II-II' of FIG. 1. FIG. 3 is a cross-sectional view of the coating apparatus 10 taken along line III-III' of FIG. 1. FIG. 4 is a cross-sectional view illustrating the coating apparatus 10 taken along line IV-IV' of FIG. 2. FIG. 5 is a cross-sectional view illustrating the coating apparatus 10 taken along line V-V' of FIG. 2.

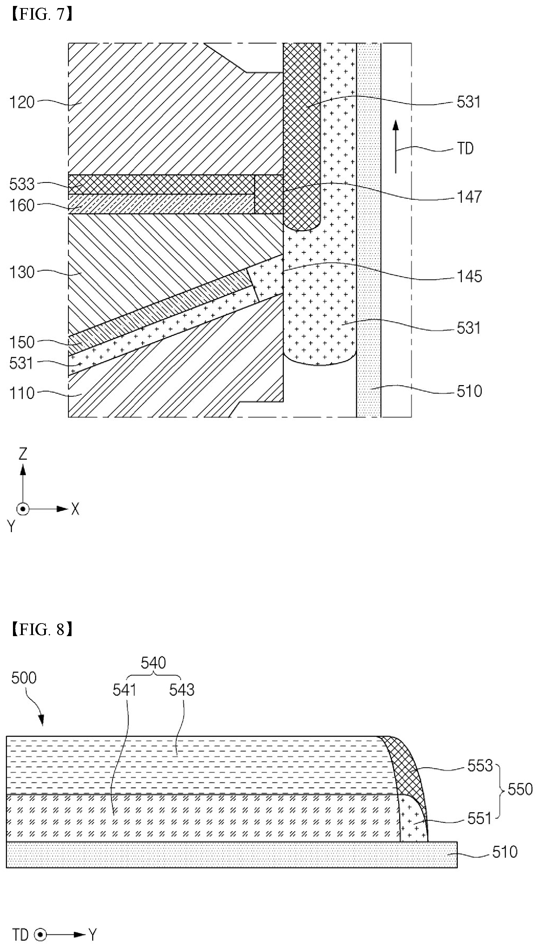

Referring to FIG. 1 to FIG. 5, the coating apparatus 10 can perform a coating process for manufacturing electrodes for secondary batteries by applying a coating liquid on a base substrate 510. The coating liquid may include an electrode slurry and an insulation liquid. The coating apparatus 10 can discharge the electrode slurry and the insulation liquid toward the base substrate 510 moving by a coating roll 180. The electrode slurry applied on the base substrate 510 becomes an electrode slurry layer 540 (in FIG. 8), and the insulation liquid applied on the base substrate 510 can become an insulating layer 550 (in FIG. 8) covering side portions of the electrode slurry layer 540.

The base substrate 510 may be a current collector. The current collector may be a positive electrode current collector. For example, the positive electrode current collector may include stainless steel, aluminum, nickel, titanium, calcined carbon, or the like. The current collector may be a negative electrode current collector. For example, the negative electrode current collector may include copper, stainless steel, nickel, titanium, calcined carbon, or the like.

The electrode slurry may include an electrode active material, a conductive material, a binder, and a solvent. The electrode active material may include a positive electrode active material or a negative electrode active material. For example, the positive electrode active material may include a lithium metal composite oxide including nickel (Ni), cobalt (Co), and manganese (Mn). For example, the negative electrode active material may include at least one of a carbon material and a silicon material. The carbon material may refer to a carbon material having carbon atoms as a main component. The silicon material is particles including silicon (Si) as a main component as a metal component, and may include at least one of silicon (Si) particles and silicon oxide particles.

The conductive material may include artificial graphite, natural graphite, carbon black, acetylene black, Ketjen black, Denka black, thermal black, channel black, carbon fiber, metal fiber, aluminum, tin, bismuth, silicon, antimony, nickel, copper, titanium, vanadium, chromium, manganese, iron, cobalt, zinc, molybdenum, tungsten, silver, gold, lanthanum, ruthenium, platinum, iridium, titanium oxide, polyaniline, polythiophene, polyacetylene, polypyrrole, or combinations thereof.

The binder can strengthen bonding between particles of the electrode slurry such as the electrode active material and the conductive material, and can strengthen bonding between the particles of the electrode slurry and the base substrate 510. For example, the binder may include polyethylene, polypropylene, polytetrafluoroethylene (PTFE), polyvinylidene fluoride (PVDF), styrene-butadiene rubber (SBR), tetrafluoroethylene-perfluoroalkyl vinyl ether copolymer, vinylidene fluoride-hexafluoropropylene copolymer, vinylidene fluoride-chlorotrifluoroethylene copolymer, ethylene-tetrafluoroethylene copolymer, polychlorotrifluoroethylene, vinylidene fluoride-pentafluoropropylene copolymer, propylene-tetrafluoroethylene copolymer, ethylene-chlorotrifluoroethylene copolymer, vinylidene fluoride-hexafluoropropylene-tetrafluoroethylene copolymer, vinylidene fluoride-perfluoromethyl vinyl ether-tetrafluoroethylene copolymer, ethylene-acrylic acid copolymer, carboxymethylcellulose (CMC), or combinations thereof.

The insulation liquid may include inorganic particles, a phenolic compound, a binder, and a solvent. For example, the inorganic particles may include at least one aluminum mineral of boehmite, gibbsite, diaspore, alunite, and nepheline. The phenolic compound can increase dispersibility of the inorganic particles included in the insulation liquid. For example, the phenolic compound may include tannic acid, baicalein, luteolin, taxifolin, myricetin, quercetin, rutin, catechin, epigallocatechin gallate, butein, piceatannol, pyrogallic acid, ellagic acid, amylose, amylopectin, xanthan gum, or combinations thereof.

The binder can strengthen bonding between particles of the insulation liquid such as inorganic particles and phenolic compound, and can strengthen bonding between the particles of the insulation liquid and the base substrate 510. The material of the binder of the insulation liquid may be the same as or similar to the material of the binder of the electrode slurry.

In exemplary embodiments, the coating apparatus 10 may be configured to simultaneously apply the electrode slurry and the insulation liquid on the base substrate 510. The insulation liquid may be applied on the base substrate 510 to cover both side portions of the electrode slurry layer 540 applied on the base substrate 510. The insulation liquid is applied on the base substrate 510 to cover both side portions of the electrode slurry layer, thereby suppressing or preventing a sliding phenomenon in which a thickness of the electrode slurry layer 540 gradually decreases at an outer portion of the electrode slurry layer 540, and a thickness deviation of the electrode slurry layer 540 applied on the base substrate 510 can be reduced.

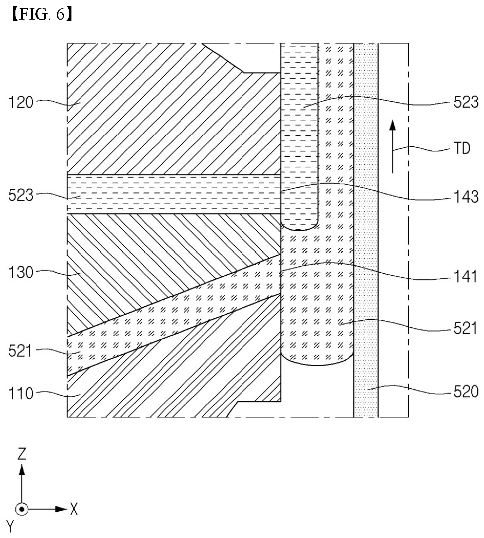

In exemplary embodiments, the coating apparatus 10 may be configured to discharge a first electrode slurry 521 (in FIG. 6) and a second electrode slurry 523 (in FIG. 6) toward the base substrate 510. The first electrode slurry 521 becomes a first electrode slurry layer 541 (in FIG. 8) applied on the base substrate 510, and the second electrode slurry 523 can become a second electrode slurry layer 543 (in FIG. 8) stacked on the first electrode slurry layer 541. The electrode slurry layer 540 may have a multilayer structure in which the first electrode slurry layer 541 and the second electrode slurry layer 543 are stacked. In exemplary embodiments, the first electrode slurry 521 and the second electrode slurry 523 may have different material compositions.

In exemplary embodiments, the coating apparatus 10 may be configured to discharge a first insulating liquid 531 (in FIG. 7) and a second insulating liquid 533 (in FIG. 7) toward the base substrate 510. The first insulating liquid 531 becomes a first insulating layer 551 (in FIG. 8) applied on the base substrate 510, and the second insulating liquid 533 can become a second insulating layer 553 (in FIG. 8) stacked on the first insulating layer 551. The first insulating layer 551 may mainly contact side portions of the first electrode slurry layer 541. The second insulating layer 553 may mainly contact side portions of the second electrode slurry layer 543. The insulating layer 550 may have a multilayer structure in which the first insulating layer 551 and the second insulating layer 553 are stacked. In exemplary embodiments, the first insulating liquid 531 and the second insulating liquid 533 may have different material compositions.

The coating apparatus 10 may include a coating die 101, a first coating shim 150, a second coating shim 160, and a coating roll 180. The first coating shim 150 and the second coating shim 160 may be disposed within the coating die 101, and the coating roll 180 may be disposed outside the coating die 101 to face a die lip of the coating die 101 in a first direction (for example, X direction). The coating roll 180 can transfer and support the base substrate 510. The coating roll 180 may be configured to rotate around a rotation axis parallel to a second direction (for example, Y direction), and can support the base substrate 510 transferred along the transfer direction.

The coating die 101 can receive the first electrode slurry 521, the second electrode slurry 523, the first insulating liquid 531, and the second insulating liquid 533 from the outside, and can discharge the first electrode slurry 521, the second electrode slurry 523, the first insulating liquid 531, and the second insulating liquid 533 toward the base substrate 510. The coating die 101 may include a first electrode slurry outlet 141 configured to discharge the first electrode slurry 521, a second electrode slurry outlet 143 configured to discharge the second electrode slurry 523, a first insulating liquid outlet 145 configured to discharge the first insulating liquid 531, and a second insulating liquid outlet 147 configured to discharge the second insulating liquid 533.

The first electrode slurry outlet 141 and the second electrode slurry outlet 143 may be sequentially arranged along the transfer direction of the base substrate 510. The first electrode slurry outlet 141 and the second electrode slurry outlet 143 may have a slit form extending in a width direction of the base substrate 510 parallel to the second direction (for example, Y direction). The length of the first electrode slurry outlet 141 along the second direction (for example, Y direction) may be greater than the length of the first electrode slurry outlet 141 along a third direction (for example, Z direction), and the length of the second electrode slurry outlet 143 along the second direction (for example, Y direction) may be greater than the length of the second electrode slurry outlet 143 along the third direction (for example, Z direction). The first electrode slurry outlet 141 and the second electrode slurry outlet 143 may be provided on a die lip of the coating die 101 facing the base substrate 510 supported by the coating roll 180.

The first insulating liquid outlet 145 and the second insulating liquid outlet 147 may be sequentially arranged along the transfer direction of the base substrate 510. The first insulating liquid outlet 145 is disposed on one side of the first electrode slurry outlet 141, and the second insulating liquid outlet 147 may be disposed on one side of the second electrode slurry outlet 143. The first insulating liquid outlet 145 may be aligned with the first electrode slurry outlet 141 in the second direction (for example, Y direction), and the second insulating liquid outlet 147 may be aligned with the second electrode slurry outlet 143 in the second direction (for example, Y direction). The first insulating liquid outlet 145 and the second insulating liquid outlet 147 may have a slit form extending in the width direction of the base substrate 510 parallel to the second direction (for example, Y direction). The length of the first insulating liquid outlet 145 along the second direction (for example, Y direction) may be greater than the length of the first insulating liquid outlet 145 along the third direction (for example, Z direction), and the length of the second insulating liquid outlet 147 along the second direction (for example, Y direction) may be greater than the length of the second insulating liquid outlet 147 along the third direction (for example, Z direction). The first insulating liquid outlet 145 and the second insulating liquid outlet 147 may be provided on a die lip of the coating die 101 facing the base substrate 510 supported by the coating roll 180.

The coating die 101 may include a first die block 110, a second die block 120, and a third die block 130. The first die block 110, the second die block 120, and the third die block 130 may be coupled to each other by a fastening member such as a bolt. The third die block 130 may be disposed between the first die block 110 and the second die block 120. The die lip of the coating die 101 may include a die lip of the first die block 110 facing the base substrate 510, a die lip of the second die block 120 facing the base substrate 510, and a die lip of the third die block 130 facing the base substrate 510. The first electrode slurry outlet 141 and the first insulating liquid outlet 145 may be provided between the die lip of the first die block 110 and the die lip of the third die block 130 with respect to the third direction (for example, Z direction). The second electrode slurry outlet 143 and the second insulating liquid outlet 147 may be provided between the die lip of the second die block 120 and the die lip of the third die block 130 with respect to the third direction (for example, Z direction).

The first die block 110 may include a first manifold 111 accommodating the first electrode slurry 521 and a first internal flow path 119 through which the first insulating liquid 531 flows. The first manifold 111 may include a space in which the first electrode slurry 521 injected through an inlet provided in the first die block 110 is accommodated. The first internal flow path 119 may be configured to deliver the first insulating liquid 531 provided from the outside to a space between the first die block 110 and the third die block 130.

The second die block 120 may include a second manifold 121 accommodating the second electrode slurry 523 and a second internal flow path 129 through which the second insulating liquid 533 flows. The second manifold 121 may include a space in which the second electrode slurry 523 injected through an inlet provided in the second die block 120 is accommodated. The second internal flow path 129 may be configured to deliver the second insulating liquid 533 provided from the outside to a space between the second die block 120 and the third die block 130.

The first coating shim 150 may be inserted into a space provided between the first die block 110 and the third die block 130. For example, the first coating shim 150 may be fastened to the first die block 110 by a fastening member such as a bolt. The first coating shim 150 may include a first electrode slurry flow path 151 communicating with the first electrode slurry outlet 141 and a first insulating liquid flow path 153 communicating with the first insulating liquid outlet 145. The first electrode slurry flow path 151 may extend between the first manifold 111 and the first electrode slurry outlet 141, and may be configured to deliver the first electrode slurry 521 from the first manifold 111 to the first electrode slurry outlet 141. The first insulating liquid flow path 153 may extend between an outlet of the first internal flow path 119 of the first die block 110 and the first insulating liquid outlet 145, and may be configured to deliver the first insulating liquid 531 from the outlet of the first internal flow path 119 of the first die block 110 to the first insulating liquid outlet 145.

In exemplary embodiments, the first coating shim 150 may include a first body shim 158 and a first spacer shim 159. The first body shim 158 may include a center body extending along an edge of the first manifold 111 and a pair of side bodies spaced apart with the first manifold 111 therebetween. The first spacer shim 159 may extend between the first manifold 111 and the die lip of the first die block 110, and may include the first insulating liquid flow path 153. The first coating shim 150 may include a plurality of first spacer shims 159 spaced apart along the second direction (for example, Y direction). Each first spacer shim 159 may include the first insulating liquid flow path 153. The first electrode slurry flow path 151 may be provided between two adjacent first spacer shims 159 among the plurality of first spacer shims 159. The first insulating liquid flow path 153 may be provided on each of both sides of each first electrode slurry flow path 151.

The second coating shim 160 may be inserted into a space provided between the second die block 120 and the third die block 130. For example, the second coating shim 160 may be fastened to the second die block 120 by a fastening member such as a bolt. The second coating shim 160 may include a second electrode slurry flow path 161 communicating with the second electrode slurry outlet 143 and a second insulating liquid flow path 163 communicating with the second insulating liquid outlet 147. The second electrode slurry flow path 161 may extend between the second manifold 121 and the second electrode slurry outlet 143, and may be configured to deliver the second electrode slurry 523 from the second manifold 121 to the second electrode slurry outlet 143. The second insulating liquid flow path 163 may extend between an outlet of the second internal flow path 129 of the second die block 120 and the second insulating liquid outlet 147, and may be configured to deliver the second insulating liquid 533 from the outlet of the second internal flow path 129 of the second die block 120 to the second insulating liquid outlet 147.

In exemplary embodiments, the second coating shim 160 may include a second body shim 168 and a second spacer shim 169. The second body shim 168 may include a center body extending along an edge of the second manifold 121 and a pair of side bodies spaced apart with the second manifold 121 therebetween. The second spacer shim 169 may extend between the second manifold 121 and the die lip of the second die block 120, and may include the second insulating liquid flow path 163. The second coating shim 160 may include a plurality of second spacer shims 169 spaced apart along the second direction (for example, Y direction). Each second spacer shim 169 may include the second insulating liquid flow path 163. The second electrode slurry flow path 161 may be provided between two adjacent second spacer shims 169 among the plurality of second spacer shims 169. The second insulating liquid flow path 163 may be provided on each of both sides of each second electrode slurry flow path 161.

The coating apparatus 10 may include a first electrode slurry supply part 191, a second electrode slurry supply part 193, a first insulating liquid supply part 195, and a second insulating liquid supply part 197.

The first electrode slurry supply part 191 can supply the first electrode slurry 521 having a predetermined material composition and properties to the coating die 101, and the second electrode slurry supply part 193 can supply the second electrode slurry 523 having a predetermined material composition and properties to the coating die 101. The first electrode slurry supply part 191 may include a supply tank in which the first electrode slurry 521 is stored and a pump installed in a supply line extending between the supply tank and the coating die 101. The second electrode slurry supply part 193 may include a supply tank in which the second electrode slurry 523 is stored and a pump installed in a supply line extending between the supply tank and the coating die 101. The first electrode slurry 521 provided from the first electrode slurry supply part 191 may be discharged toward the base substrate 510 through the first manifold 111 of the first die block 110, the first electrode slurry flow path 151 of the first coating shim 150, and the first electrode slurry outlet 141 of the coating die 101 in sequence. The second electrode slurry 523 provided from the second electrode slurry supply part 193 may be discharged toward the base substrate 510 through the second manifold 121 of the second die block 120, the second electrode slurry flow path 161 of the second coating shim 160, and the second electrode slurry outlet 143 of the coating die 101 in sequence.

The first insulating liquid supply part 195 can supply the first insulating liquid 531 having a predetermined material composition and properties to the coating die 101, and the second insulating liquid supply part 197 can supply the second insulating liquid 533 having a predetermined material composition and properties to the coating die 101. The first insulating liquid supply part 195 may include a supply tank in which the first insulating liquid 531 is stored and a pump installed in a supply line extending between the supply tank and the coating die 101. The second insulating liquid supply part 197 may include a supply tank in which the second insulating liquid 533 is stored and a pump installed in a supply line extending between the supply tank and the coating die 101. The first insulating liquid 531 provided from the first insulating liquid supply part 195 may be discharged toward the base substrate 510 through the first internal flow path 119 of the first die block 110, the first insulating liquid flow path 153 of the first coating shim 150, and the first insulating liquid outlet 145 of the coating die 101 in sequence. The second insulating liquid 533 provided from the second insulating liquid supply part 197 may be discharged toward the base substrate 510 through the second internal flow path 129 of the second die block 120, the second insulating liquid flow path 163 of the second coating shim 160, and the second insulating liquid outlet 147 of the coating die 101 in sequence.

FIG. 6 and FIG. 7 are cross-sectional views illustrating a coating process of the coating apparatus 10 according to exemplary embodiments of the present disclosure. FIG. 8 is a cross-sectional view illustrating an electrode sheet 500 manufactured through coating by the coating apparatus 10 according to exemplary embodiments of the present disclosure.

Referring to FIG. 1 to FIG. 8, the coating apparatus 10 can manufacture the electrode sheet 500 by coating the electrode slurry layer 540 and the insulating layer 550 on the base substrate 510. More specifically, the coating apparatus 10 can manufacture the electrode sheet 500 by coating the electrode slurry layer 540 having a multilayer structure in which the first electrode slurry layer 541 and the second electrode slurry layer 543 are stacked and the insulating layer 550 having a multilayer structure in which the first insulating layer 551 and the second insulating layer 553 are stacked on the base substrate 510.

To manufacture the electrode sheet 500, while the base substrate 510 is transferred along the transfer direction TD by the coating roll 180, the coating die 101 of the coating apparatus 10 may be configured to simultaneously discharge the first electrode slurry 521, the second electrode slurry 523, the first insulating liquid 531, and the second insulating liquid 533 toward the base substrate 510. The first electrode slurry 521 discharged from the first electrode slurry outlet 141 of the coating die 101 can form the first electrode slurry layer 541 extending along the base substrate 510, and the second electrode slurry 523 discharged from the second electrode slurry outlet 143 of the coating die 101 can form the second electrode slurry layer 543 extending along the first electrode slurry layer 541. The first insulating liquid 531 discharged from the first insulating liquid outlet 145 of the coating die 101 can form the first insulating layer 551 extending along the base substrate 510, and the second insulating liquid 533 discharged from the second insulating liquid outlet 147 of the coating die 101 can form the second insulating layer 553 extending along the first insulating layer 551. The first insulating layer 551 extends mainly along side portions of the first electrode slurry layer 541, thereby suppressing a sliding phenomenon of the first electrode slurry layer 541. The second insulating layer 553 extends mainly along side portions of the second electrode slurry layer 543, thereby suppressing a sliding phenomenon of the second electrode slurry layer 543.

In exemplary embodiments, the solid content of the first insulating liquid 531 and the solid content of the second insulating liquid 533 may be different from each other. In the present disclosure, unless otherwise defined, content is understood to refer to wt.%. In exemplary embodiments, the viscosity of the first insulating liquid 531 and the viscosity of the second insulating liquid 533 may be different from each other.

When the solid content of the first insulating liquid 531 and the solid content of the second insulating liquid 533 are too small, there is a concern that the thickness of the insulating layer 550 may be lowered and the sliding phenomenon of the electrode slurry layer 540 may not be sufficiently suppressed. When the solid content of the first insulating liquid 531 and the solid content of the second insulating liquid 533 are too large, the viscosity of the first insulating layer 551 and the viscosity of the second insulating layer 553 may become too large, and there is a concern that excessive pressure may be formed in the insulating liquid flow path of the coating die 101, which may damage the first coating shim 150 and the second coating shim 160, and the first insulating liquid 531 and the second insulating liquid 533 may not be discharged at a sufficient flow rate from the coating die 101. In exemplary embodiments, the solid content of the first insulating liquid 531 and the solid content of the second insulating liquid 533 may each have a range of 10 wt.% to 30 wt.%. In exemplary embodiments, the viscosity of the first insulating liquid 531 and the viscosity of the second insulating liquid 533 may each have a range of 900 cps to 5000 cps. The solid content and viscosity of the first insulating liquid 531 may be controlled by the first insulating liquid supply part 195, and the solid content and viscosity of the second insulating liquid 533 may be controlled by the second insulating liquid supply part 197.

In exemplary embodiments, the solid content of the second insulating liquid 533 may be greater than the solid content of the first insulating liquid 531. In this case, the viscosity of the second insulating liquid 533 may be greater than the viscosity of the first insulating liquid 531. For example, when the solid content of the second insulating liquid 533 is A wt.% and the solid content of the first insulating liquid 531 is B wt.%, a difference between the solid content (A wt.%) of the second insulating liquid 533 and the solid content (B wt.%) of the first insulating liquid 531 may be between 5 wt.%p and 15 wt.%p. For example, the solid content of the second insulating liquid 533 may be between 25 wt.% and 30 wt.%, and the solid content of the first insulating liquid 531 may be between 10 wt.% and 20 wt.%.

In exemplary embodiments, the coating die 101 may be configured to simultaneously discharge the first insulating liquid 531 having a normal level of solid content and the second insulating liquid 533 having a relatively high level of solid content. In this case, the first insulating liquid 531 having relatively high fluidity can be applied on the base substrate 510 so that the insulating layer 550 has an intended width, and the second insulating layer 553 formed from the second insulating liquid 533 having a high level of solid content can be applied on the base substrate 510 to have a large thickness. As the thickness of the second insulating layer 553 is increased, a total thickness of the insulating layer 550 can be increased. Since the total thickness of the insulating layer 550 is increased, a contact area where the insulating layer 550 in a wet state meets the electrode slurry layer 540 in a wet state is increased, thereby improving a sliding suppression effect of the electrode slurry layer 540.

In exemplary embodiments, the solid content of the first insulating liquid 531 may be greater than the solid content of the second insulating liquid 533. In this case, the viscosity of the first insulating liquid 531 may be greater than the viscosity of the second insulating liquid 533. For example, when the solid content of the first insulating liquid 531 is C wt.% and the solid content of the second insulating liquid 533 is D wt.%, a difference between the solid content (C wt.%) of the first insulating liquid 531 and the solid content (D wt.%) of the second insulating liquid 533 may be between 5 wt.%p and 10 wt.%p. For example, the solid content of the first insulating liquid 531 may be between 25 wt.% and 30 wt.%, and the solid content of the second insulating liquid 533 may be between 10 wt.% and 20 wt.%.

In exemplary embodiments, the coating die 101 may be configured to simultaneously discharge the second insulating liquid 533 having a normal level of solid content and the first insulating liquid 531 having a relatively high level of solid content. In this case, the first insulating layer 551 formed from the first insulating liquid 531 having a high level of solid content can be applied on the base substrate 510 to have a large thickness. As the thickness of the first insulating layer 551 is increased, a total thickness of the insulating layer 550 can be increased. Since the total thickness of the insulating layer 550 is increased, a contact area where the insulating layer 550 in a wet state meets the electrode slurry layer 540 in a wet state is increased, thereby improving a sliding suppression effect of the electrode slurry layer 540.

### (second embodiment)

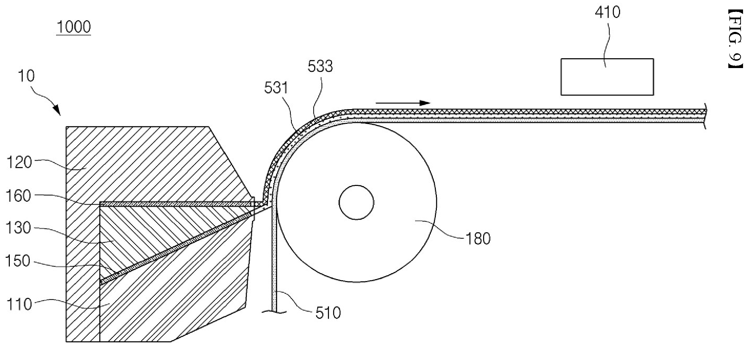

FIG. 9 is a cross-sectional view illustrating an electrode manufacturing device 1000 according to exemplary embodiments of the present disclosure.

Referring to FIG. 9 together with FIG. 1 to FIG. 8, the electrode manufacturing device 1000 may include the coating apparatus 10 and a drying device 410. The coating apparatus 10 and the drying device 410 may be sequentially disposed along the transfer direction of the base substrate 510.

The coating apparatus 10 can perform a coating process for forming the electrode slurry layer 540 and the insulating layer 550. The coating apparatus 10 can form the electrode slurry layer 540 in which the first electrode slurry layer 541 and the second electrode slurry layer 543 are stacked and the insulating layer 550 in which the first insulating layer 551 and the second insulating layer 553 are stacked by simultaneously discharging the first electrode slurry 521, the second electrode slurry 523, the first insulating liquid 531, and the second insulating liquid 533 toward the base substrate 510 while the base substrate 510 is transferred by the coating roll 180.

The drying device 410 can perform a drying process on the electrode slurry layer 540 and the insulating layer 550. The drying device 410 may include a heat source configured to apply heat to the electrode slurry layer 540 and the insulating layer 550. For example, the drying device 410 may be configured to supply hot air to the electrode slurry layer 540 and the insulating layer 550.

### (third embodiment)

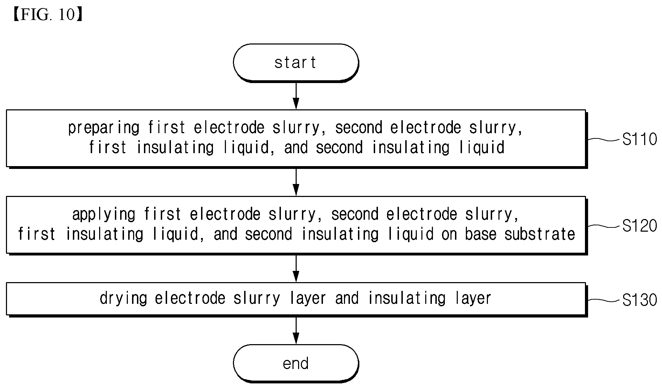

FIG. 10 is a flowchart illustrating an electrode manufacturing method according to exemplary embodiments of the present disclosure. Hereinafter, referring to FIG. 1 to FIG. 10, the electrode manufacturing method according to exemplary embodiments will be described.

Referring to FIG. 10, a mixing process is performed to prepare the first electrode slurry 521, the second electrode slurry 523, the first insulating liquid 531, and the second insulating liquid 533 (S110). The first electrode slurry 521, the second electrode slurry 523, the first insulating liquid 531, and the second insulating liquid 533 can each be manufactured to have an intended material composition through the mixing process.

In exemplary embodiments, the first insulating liquid 531 and the second insulating liquid 533 may be manufactured to have different solid contents. In exemplary embodiments, the solid content of the second insulating liquid 533 may be greater than the solid content of the first insulating liquid 531.

In exemplary embodiments, the first electrode slurry 521 and the second electrode slurry 523 may be manufactured to have different solid contents. In exemplary embodiments, the solid content of the first electrode slurry 521 may be greater than the solid content of the second electrode slurry 523. In exemplary embodiments, a binder content of the first electrode slurry 521 may be greater than a binder content of the second electrode slurry 523. In exemplary embodiments, a conductive material content of the first electrode slurry 521 may be greater than a conductive material content of the second electrode slurry 523.

After the first electrode slurry 521, the second electrode slurry 523, the first insulating liquid 531, and the second insulating liquid 533 are prepared, a coating process using the coating apparatus 10 is performed to apply the first electrode slurry 521, the second electrode slurry 523, the first insulating liquid 531, and the second insulating liquid 533 on the base substrate 510 (S120). The first electrode slurry 521 discharged from the coating die 101 becomes the first electrode slurry layer 541 extending along the base substrate 510, and the second electrode slurry 523 discharged from the coating die 101 can become the second electrode slurry layer 543 extending along the first electrode slurry layer 541. In addition, the first insulating liquid 531 discharged from the coating die 101 becomes the first insulating layer 551 extending along the base substrate 510, and the second insulating liquid 533 discharged from the coating die 101 can become the second insulating layer 553 extending along the first insulating layer 551.

In exemplary embodiments, the first insulating layer 551 can be formed from the first insulating liquid 531 having a normal level of solid content, and the second insulating layer 553 can be formed from the second insulating liquid 533 having a relatively high level of solid content. In this case, as the thickness of the second insulating layer 553 is increased, a total thickness of the insulating layer 550 can be increased. Since the total thickness of the insulating layer 550 is increased, a contact area where the insulating layer 550 in a wet state meets the electrode slurry layer 540 in a wet state is increased, thereby improving a sliding suppression effect of the electrode slurry layer 540.

After applying the electrode slurry layer 540 and the insulating layer 550 on the base substrate 510 through the coating process, a drying process is performed on the electrode slurry layer 540 and the insulating layer 550 (S130). During the drying process, heat is applied to the electrode slurry layer 540 and the insulating layer 550, and the solvent of the electrode slurry layer 540 and the solvent of the insulating layer 550 can be removed.

According to exemplary embodiments of the present disclosure, by simultaneously discharging the first electrode slurry 521, the second electrode slurry 523, the first insulating liquid 531, and the second insulating liquid 533 toward the base substrate 510, the electrode sheet 500 having the electrode slurry layer 540 with a stacked structure in which the first electrode slurry layer 541 and the second electrode slurry layer 543 are stacked and the insulating layer 550 with a stacked structure in which the first insulating layer 551 and the second insulating layer 553 are stacked can be manufactured.

In exemplary embodiments, the electrode manufacturing method may further include a roll pressing process of pressing the electrode sheet 500 by passing the electrode sheet 500 between a pair of pressing rolls, and a slitting and notching process of cutting the electrode sheet 500 into a predetermined shape and dimensions.

According to exemplary embodiments of the present disclosure, by forming one of the first insulating layer 551 and the second insulating layer 553 from an insulating liquid having a high solid content, a total thickness of the insulating layer 550 can be increased. Since the total thickness of the insulating layer 550 is increased, a contact area where the insulating layer 550 in a wet state meets the electrode slurry layer 540 in a wet state is increased, thereby improving a sliding suppression effect of the electrode slurry layer 540.

As described above, the present disclosure has been described in more detail through drawings and embodiments. However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

## Claims

1. A coating apparatus, comprising:
a coating die comprising a first electrode slurry outlet discharging a first electrode slurry, a first insulating liquid outlet discharging a first insulating liquid, a second electrode slurry outlet discharging a second electrode slurry, and a second insulating liquid outlet discharging a second insulating liquid;
a first coating shim inserted into the coating die and comprising a first electrode slurry flow path communicating with the first electrode slurry outlet and a first insulating liquid flow path communicating with the first insulating liquid outlet; and
a second coating shim inserted into the coating die and comprising a second electrode slurry flow path communicating with the second electrode slurry outlet and a second insulating liquid flow path communicating with the second insulating liquid outlet,
wherein a solid content of the first insulating liquid is different from a solid content of the second insulating liquid.

2. The coating apparatus of claim 1, wherein the coating die comprises:
a first die block comprising a first manifold accommodating the first electrode slurry and a first internal flow path communicating with the first insulating liquid flow path of the first coating shim;
a second die block comprising a second manifold accommodating the second electrode slurry and a second internal flow path communicating with the second insulating liquid flow path of the second coating shim; and
a third die block disposed between the first die block and the second die block,
wherein the first coating shim is disposed between the first die block and the third die block, and
the second coating shim is disposed between the second die block and the third die block.

3. The coating apparatus of claim 1, further comprising:
a first insulating liquid supply part supplying the first insulating liquid to the coating die; and
a second insulating liquid supply part supplying the second insulating liquid to the coating die,
wherein the first insulating liquid supplied from the first insulating liquid supply part and the second insulating liquid supplied from the second insulating liquid supply part have different solid contents.

4. The coating apparatus of claim 1, further comprising a coating roll supporting a base substrate transferred in a transfer direction,
wherein the first insulating liquid outlet and the second insulating liquid outlet are sequentially disposed along the transfer direction of the base substrate, and
the solid content of the second insulating liquid is greater than the solid content of the first insulating liquid.

5. The coating apparatus of claim 4, wherein a viscosity of the second insulating liquid is greater than a viscosity of the first insulating liquid.

6. The coating apparatus of claim 4, wherein the solid content of the first insulating liquid is between 10 wt.% and 20 wt.%, and
the solid content of the second insulating liquid is between 25 wt.% and 30 wt.%.

7. The coating apparatus of claim 4, wherein the first electrode slurry outlet and the second electrode slurry outlet are sequentially disposed along the transfer direction of the base substrate,
the first electrode slurry outlet is disposed on one side of the first insulating liquid outlet, and
the second electrode slurry outlet is disposed on one side of the second insulating liquid outlet.

8. The coating apparatus of claim 1, further comprising a coating roll supporting a base substrate transferred in a transfer direction,
wherein the first insulating liquid outlet and the second insulating liquid outlet are sequentially disposed along the transfer direction of the base substrate, and
the solid content of the first insulating liquid is greater than the solid content of the second insulating liquid.

9. The coating apparatus of claim 8, wherein a viscosity of the first insulating liquid is greater than a viscosity of the second insulating liquid.

10. The coating apparatus of claim 1, wherein the coating die is configured to simultaneously discharge the first electrode slurry, the second electrode slurry, the first insulating liquid, and the second insulating liquid toward a base substrate.

11. The coating apparatus of claim 10, wherein the coating apparatus is configured to coat a first electrode slurry layer formed from the first electrode slurry, a second electrode slurry layer formed from the second electrode slurry, a first insulating layer formed from the first insulating liquid, and a second insulating layer formed from the second insulating liquid on the base substrate,
wherein the second electrode slurry layer is stacked on the first electrode slurry layer, and
the second insulating layer is stacked on the first insulating layer.
